# EUROPEAN PATENT SPECIFICATION

(11) **EP 2 584 666 B1**
(45) Date of publication and mention of the grant of the patent: **27.11.2019**
(21) Application number: 11185471.7
(22) Date of filing: 17.10.2011
(51) Int. Cl.: H02J 7/04, H01M 10/44, H01M 10/052, H01M 10/615, H01M 10/637

(54) **Method for charging a battery by current or temperature control**
Verfahren zum Aufladen einer Batterie durch Strom- oder Temperatursteuerung
Procédé pour charger une batterie par contrôle du courant ou de la température

(43) Date of publication of application: 24.04.2013
(73) Proprietor: Sony Mobile Communications AB, 221 88 Lund (SE)
(72) Inventor: Svensson, Jan-Olof, 277 35 Kivik (SE); Wolf, Mats, 247 35 Södra Sandby (SE)
(74) Representative: Neij & Lindberg AB

(56) References cited:
- JP-A- 2010 124 688
- US-A- 5 773 956
- US-B1- 6 437 543
- US-B2- 6 639 386
- US-B2- 7 180 269
- US-B2- 7 446 508

## Description

### BACKGROUND

Charging of most lithium-based batteries requires strict temperature control which amounts to restricting at what temperature the battery can be charged at. Within a certain temperature window almost all batteries are charged using rather crude current and voltage control techniques.

Some new technologies show a somewhat worse performance from a thermal point of view while the devices become warmer during use due to higher power requirements.

On the other hand, consumers generally expect improved performance from the battery. Hence there is a need for improved battery performance as well as prolonged life cycle of the battery.

The solution according to the present invention offers solutions to at least some of the problems with present day methods of charging batteries.

US 7,446,508 discloses a battery charger for charging a lithium-ion battery, which includes a temperature control unit and a current supplying unit. The temperature control unit controls the temperature of the battery to fall in a predetermined range. The predetermined range is divided into a plurality of sub-divided temperature ranges. The current supplying unit supplies the battery with a temperature-dependent current relation to a sub-divided temperature range in which the temperature of the battery falls.

US 7 180 269 B2 discloses a battery charging method comprising detection of battery temperature and including a temperature maintaining charging operation, wherein average charging current is controlled to drive battery temperature to a holding temperature, and charging is performed while maintaining battery temperature at that holding temperature.

US 5,773,956 relates to a method for charging a rechargeable battery, according to which ultra-fast charging of in particular NiMH-batteries is achieved by controlling the charging current and the charging voltage, respectively, such that the temperature of the battery is constant.

### SUMMARY

According to a first aspect of the invention, the solution is related to a first method for charging a battery by introducing a charging current into the battery and monitoring a cell temperature of the battery. If the cell temperature has reached a given temperature range the charging current is reduced until the cell temperature reaches the lower limit of the given temperature range. Thereafter, the charging current is maintained at the level at which the lower cell temperature limit has been reached.

The advantage of this approach, if applied for many charge-cycles, is that the life-cycle of the battery thus charged is prolonged compared to present day charging methods, since the cell temperature at which the battery is charged has a significant bearing on the life-cycle of the battery .

### DESCRIPTION OF THE DRAWINGS

Fig. 1 depicts one embodiment of a charging device for a battery according to one embodiment of the present invention.
Fig. 2 illustrates a first embodiment of the method according to the present invention in the form of a flowchart.
Fig. 3 illustrates a second embodiment of the method in the form of a flowchart.
Fig. 4a shows a time-based current/voltage-diagram over the charging process for two different batteries based on different battery technologies.
Fig. 4b shows a time-based current/ temperature diagram over the charging process for the two batteries from Fig. 4a.
Fig. 5 is a diagram over a charging process according to the present invention for three different battery cell temperatures.
Fig. 6 is a diagram over a simulation of a battery charging process.

### DETAILED DESCRIPTION

Below follows a description of a charging device and a first and a second embodiment of a method for charging a battery. The second embodiment of the method does not fall under the scope of the claims and does not describe the claimed invention.

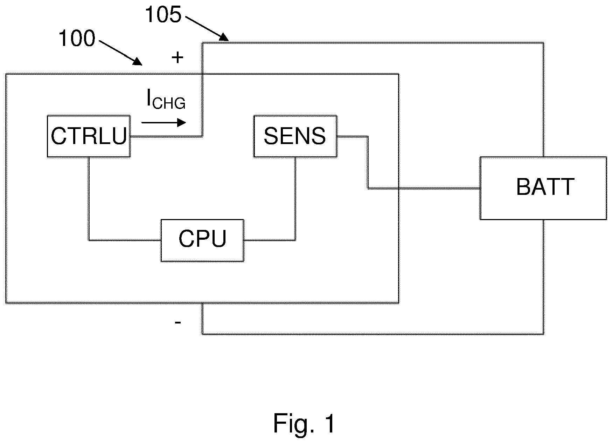

Fig. 1 depicts a charging device 100 according to one embodiment of the present invention which is used for charging a battery BATT. As can be seen from the figure, the charging device 100 comprises a processing unit CPU which is connected to a control unit CTRLU and a monitoring unit SENS. Moreover, the control unit CTRLU supplies the battery BATT with a charging current I_{CHG} and a charging voltage V_{CHG} which is symbolically depicted by the "+" and minus signs "-" at the circuit connection 105. It is understood that the "+" and "-" parts of the charging circuit connecting the charging device 100 and the batter y BATT to be charged are connected to poles of the battery BATT with opposite polarity (not shown). One way of realizing the control unit CTRL is to use a solid state power generator and transformer which is connected to a power outlet (not shown).

Additionally, the sensing unit SENS is adapted to monitor the charging temperature of the battery BATT and to supply this information to the processing unit CPU of the charging device 100. Moreover, the sensing unit SENS is also adapted to monitor the battery cell voltage. One way of realizing the temperature part of the sensing unit SENS is via a resistive temperature sensor attached either directly to the surface of the battery by whatever means available or by being located in such physical proximity to the battery BATT to be charged in order to obtain accurate values for the current temperature of the battery BATT. The monitoring of the battery cell voltage will not be elaborated upon here, as it is well known to the skilled person.

As for the processing unit CPU, its main functions are receiving temperature information from the sensing unit SENS and, depending on the information received, instruct the control unit CTRL either to increase the charging current I_{CHG} to the battery BATT or to decrease it. With regards to the charging voltage VCHG, it varies proportionally to the current, as is well-known. It should be mentioned, however, that once the maximum cell voltage for the battery is reached (which amounts to the battery BATT being fully charged) usually the battery cells themselves limit the charging current supplied to them. Now, depending on the charging mechanism , the processing unit CPU according to the present invention is either adapted to instruct the control unit CTRLU firstly send a high charging current I_{CHG} into the battery in order to gradually warm up the battery BATT resistively or to gradually increase charging current I_{CHG} into the battery. This depends on the battery temperature information which the processing unit CPU is adapted to receive from the sensing unit SENS. At low battery temperatures, such as close to 0°C, the control unit CPU is adapted to instruct the control unit CTRL to send a high charging current into the battery and thereby heat up the battery resistively up to an optimum charging temperature, which for example may be somewhere in the interval 28°C - 30°C. It should be remarked here that during the heating up of the battery from a low cell temperature by means of the charging current, other effects also come into play besides resistive heating. These effects have to do with the internal cell chemistry of the battery cells. At low battery cell temperatures, the contribution to the heating up of the battery by means of the charge current supplied from the charging device 100 is thus both resistive and due to the chemical reactions occurring in the battery cells. As the cell temperature of the battery BATT increases the contribution to the heating of the battery cell from the chemical reactions in the battery cells becomes smaller while the resistive part becomes greater.

Additionally, the processing unit CPU may instruct the sensing unit SENS to detect the present cell temperature of the battery BATT and compare it to an optimum cell temperature range for charging the battery BATT. Depending on whether the current cell temperature is inside or outside this interval, the processing unit CPU may be adapted to instruct the control unit CTRLU to regulate the charging current I_{CHG} supplied to the battery BATT in order to move the cell temperature of the battery BATT into this interval either by increasing or decreasing the charging current I_{CHG}.

Moreover, as the optimum charging temperature interval can vary from battery type to battery type (and is usually specified) the processing unit may be adapted to have these optimum temperature intervals stored in a memory (not shown).

If the temperature information received from the sensing unit SENS at the processing unit CPU indicates medium battery temperatures, i.e. either slightly below the lower limit temperature interval or slightly above the upper limit of the of the optimum charging temperature interval for the battery BATT, the central processing unit CPU may instruct the control unit CTRLU to send an initial high charging current I_{CHG} into the battery BATT during a short period of time. After receiving temperature information form the sensing unit SENS indicating that the battery temperature is in the optimum temperature range for charging, the processing unit CPU may instruct the CTRLU to gradually decrease the charging current supplied to the battery.

In the other case with the low initial battery temperature, once the processing unit CPU has received battery temperature information from the sensing unit SENS indicating that the battery BATT temperature is within the predefined optimum temperature interval, it is adapted to instruct the control unit CTRLU to regulate the charging current I_{CHG} in order to keep the battery temperature within that predefined temperature interval until the target battery cell voltage has been reached. As stated earlier, the battery cells themselves will limit the charging current I_{CHG} supplied to the battery BATT once the maximum cell voltage for the battery BATT has been reached.

It should be noted that the charging device 100 described above and shown in Fig. 1 is well-adapted to charging lithium-based batteries which are extensively used in mobile and handheld terminals, such as cell phones, PDAs, notebook computers, portable media players and so on.

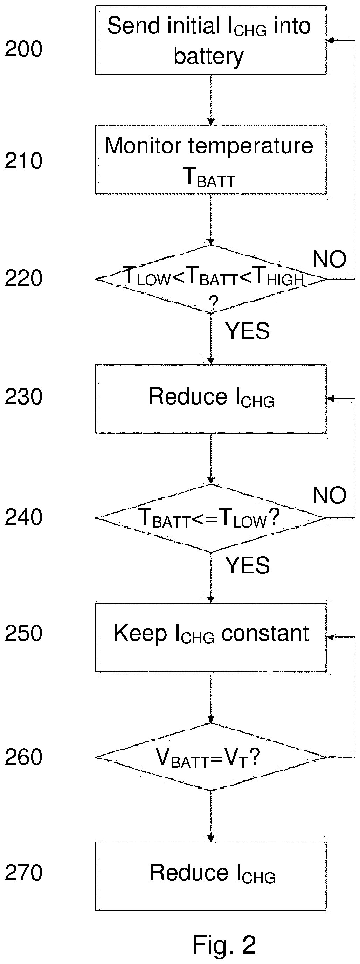

Fig. 2 depicts a flowchart of a method for charging a battery according to a first embodiment of the present invention. We assume for the sake of simplicity that the battery cell temperature in this specific case is approximately equal to room temperature, i.e. T_{BATT} = 20°C.

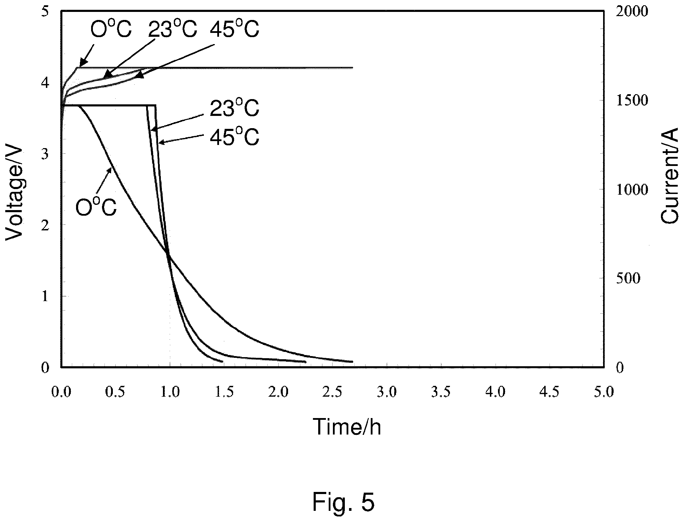

At step 200, an initial charging current I_{CHG} is introduced into the battery to be charged. This may be done on request by a central processing unit to a control unit, such as in the case of the charging device 100 described in Fig. 1 earlier. As mentioned before, the initial charging current may be introduced into the battery for a short period of time and be higher than the standard charging current. One variant of this process is illustrated in Figs. 5, which will be explained later. The initial charging current I_{CHG} can be a constant DC-current.

At step 210, the battery temperature T_{BATT} is monitored in order to monitor the effect of the initial high charging current I_{CHG}. Even though step 210 is described as a step separate from the introduction of the charging current into the battery, it is preferable to monitor the battery temperature T_{BATT} throughout the charging process. The monitoring of the battery temperature T_{BATT} can for example be made by a resistive temperature sensor, such as mentioned in the case of the sensing unit SENS in Fig. 1.

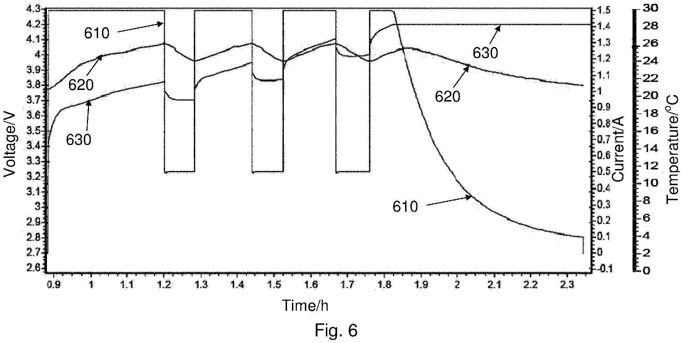

We assume here that there is a predefined optimum temperature interval for the battery to be charged which ensures a maximum life cycle for the battery and that it differs for different battery types. Usually, this temperature interval is specified in advance. As can be seen from Fig. 6, this interval may for example be 22°C-26°C.

As a consequence of the initial high charging current I_{CHG}, the battery cell temperature will start to increase from the initial value of about 20°C. At step 220, it is checked whether the current battery cell temperature T_{BATT} is located within that predefined temperature interval, i.e. it is checked whether the relation T_{LOW}<T_{BATT}<T_{HIGH} is fulfilled. If not, the initial high charging current I_{CHG} is held constant and the method returns to step 210 where the battery temperature T_{BATT} is constantly monitored.

If however, the battery temperature T_{BATT} is detected to be within the predefined temperature interval, then the charging current I_{CHG} is gradually reduced at step 230. During the onset of the charging current I_{CHG} reduction phase the battery temperature will start to increase up to a certain maximum temperature (for example around 32°C in Fig. 1) whereafter it will start decreasing.

At step 240 it is checked whether the battery cell temperature has reached the lower threshold T_{LOW} of the predefined temperature interval. If yes, the charging current I_{CHG} is held constant at step 250. If not, the charging current I_{CHG} supplied to the battery is reduced further in step 230.

Thereafter, at step 260 it is checked whether the battery cell voltage has reached the target cell voltage, which means the batter y has been fully charged. If yes, the battery cells themselves reduce the charging current I_{CHG} at step 270. If not, the charging current I_{CHG} is still held constant at step 250.

Thanks to the method according to the present invention, the temperature rise of the battery temperature T_{BATT} will be moderate and held within the limits of the predefined temperature range which ensures a longer battery life cycle than when using traditional battery charging methods. Once the target battery cell voltage V_{T} is reached, the battery cells themselves decrease the charging current I_{CHG} supplied to them.

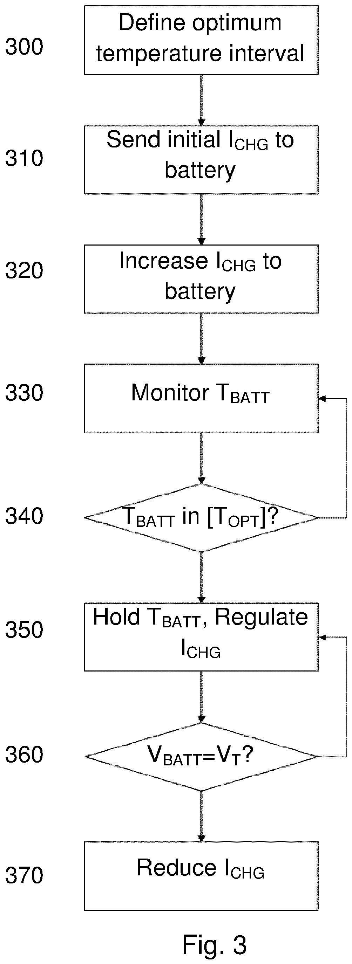

Now, a method according to a second embodiment will be presented using the flowchart depicted in Fig. 3. It is suitable to be implemented by the charging device 100 in Fig. 1.

At the outset, at step 300 an optimum cell temperature interval for the charging of the battery is defined. These temperature intervals differ from battery to battery and also from battery type to battery type. As stated earlier in the description, a charging device such as the one described in Fig. 1 may be used to charge the battery.

Now, we assume in this example that we are about to charge a lithium-based battery which has a current battery temperature T_{BATT}= 0°C and that the optimum temperature interval for the battery is in the area 28°C-30°C.

At step 310, an initial charging current I_{CHG} is sent to the battery to be charged.

At step 320 the charging current is gradually increased in order to resistively heat up the battery from the low initial temperature. A relatively large contribution to the heating of the battery at these low temperatures comes also from the internal chemical reaction occurring within the battery cells themselves. Then, at step 330 the battery temperature is monitored in order to detect whether it has reached a predefined temperature range which is considered optimal for maximizing the battery life cycle of the battery. Even though it seems as if the monitoring step at 330 is performed after the increase in charging current supplied to the battery, the monitoring of the battery temperature T_{BATT} is performed throughout the charging process.

Now, if at step 340 it is detected that the battery temperature T_{BATT} has reached the predefined optimum temperature range, then the battery temperature is held in the predefined temperature range by regulating the charging current I_{CHG}. On the other hand, if the battery temperature has not reached the predefined optimum range than the method returns to step 320 where the charging current I_{CHG} is increased again.

Now after it is determined at step 340 that the battery cell temperature has reached the predefined optimum temperature range, the battery temperature is held in that range at step 350 by regulating the charging current I_{CHG} which could either mean that charging current I_{CHG} is held constant or decreased.

If at step 360 it is detected that the battery voltage V_{BATT} has reached the target cell voltage V_{T} then the charging current I_{CHG} is gradually reduced to zero. The reduction of the charging current I_{CHG} is usually done by the battery cells themselves once the target cell voltage V_{T} for the cells is reached. On the other hand, if at step 350 it is detected that the target cell voltage for the battery has not been reached yet, the method according to this embodiment returns to step 350 to keep holding the battering temperature T_{BATT} in the predefined optimum region by regulating the charging current I_{CHG}.

It is worthwhile mentioning that the second embodiment of the method according to the present invention in Fig. 3 could equally be applied to a battery whose cell temperature is significantly higher that the optimum temperature interval described at step 300 of the embodiment. One could simply modify the step 320 so that the charging current supplied to the battery is decreased in order to cool the battery down. The method steps 330-370 would then be identical for this case.

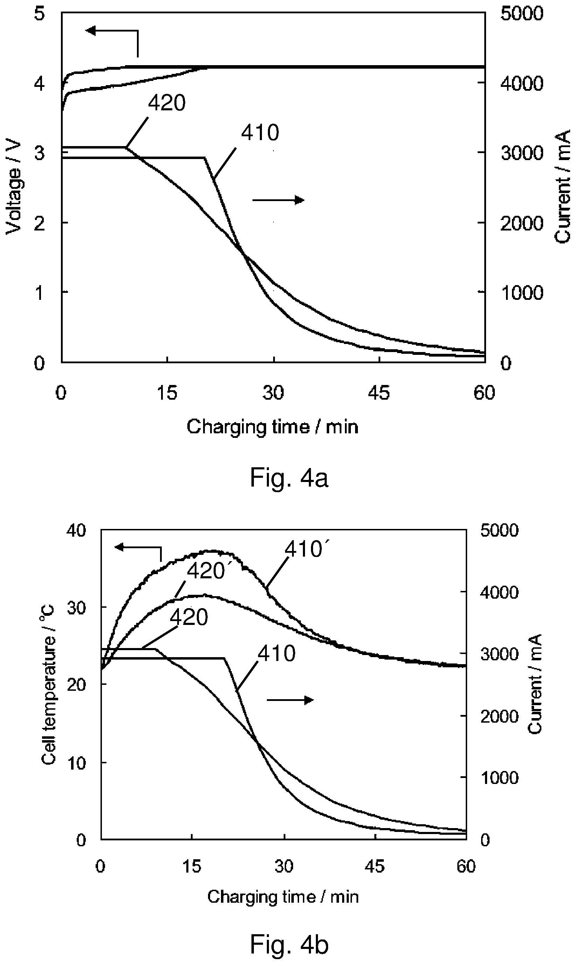

Fig. 4a depicts a charging process for two different lithium-ion based batteries using two different charging currents. The first curve, i.e. 410 represents the charging current for a lithium nickel cobalt aluminium oxide (NCA) battery, while the second curve 420 represents the charging current for a lithium cobalt oxide (LCO) battery. One can see that both charging currents are roughly of about the same magnitude, i.e. around 3 A. Since the two batteries use different technologies and have different cell voltage profiles the charging processes applied to them are slightly different. In both cases a charging current of 3 A is introduced into the battery and the current is held constant until it is detected that the target cell voltage for the battery has been reached. As seen from the diagram, the target cell voltage for the NCA battery has been achieved after about 20 minutes. Thereafter, the charging current is rapidly decreased to nearly 0 A. We see that the cell battery temperature 410' for the NCA battery during this charging process reaches much higher peak values than in the case of the LCO battery. In the case of the LCO battery, the charging current depicted by the curve 420 is held constant and reduced earlier than in the case of the NCA battery. As a result of this, the cell temperature of the LCO battery represented by curve 420' does not reach as high a value as in the case of the NCA battery. Hence LCO batteries in comparison to NCA batteries of the same capacity do not become as warm during the charging process, but at the expense of a somewhat longer charging process. Figs. 4a and 4b thus show different battery cell technologies result in different thermal properties and different electrical performance.

It should be noted that many other lithium-ion based technologies exist, which result in different battery chemistries. The charging current, target voltages and temperature behaviour would naturally be different from the examples in Fig. 4a and Fig. 4b.

Fig. 5 depicts three charging mechanisms according to the present invention for three different battery temperatures. The battery to be charged is lithium-ion based battery with a current of roughly 1,5 A and a target cell voltage of 4,2 V. The lower three curves represent the charging current while the upper three represent the cell voltage of the battery.

As can be seen from the diagram, the first curve represents the charging current at 0°C battery temperature. Now, keeping the description of the second embodiment of the method according to the present invention in mind, the charging current is used to heat up the battery resistively from 0°C up to the optimum temperature range, which in this case is chosen to be between 28°C and 30°C. Once the battery temperature has reached this range, the battery temperature is held in this range by regulating the charging current. Once the target cell voltage for the battery is reached, regulation of the charging current ceases and the charging current is gradually decreased by the battery cells themselves. One can see that the target cell voltage is reached earlier with this method than with the remaining two methods.

The second and third charging methods (curves marked with 23°C and 45°C) correspond to the first embodiment of the method according to the present invention described in relation to Fig. 2. Once the target battery cell voltage is reached, the charging current is rapidly decreased. In the first case the temperature of the battery is roughly around room temperature (23°C), while the battery cell temperature in the third case (45°C) is significantly above the optimum cell temperature interval. By optimum cell temperature interval, we refer to the cell temperature at which the charging of the battery ensures maximum life-cycle. In both cases a high and constant charging current is applied until the target voltage for the battery cells is reached. Using this method, the battery is charged more quickly than in the first case, but possibly at the expense of a shorter battery life-cycle. We can also see that at higher temperatures faster charging times for the battery can be achieved at the same level of the charging current. Controlling the cell temperature during charging can thus for example be used to minimize the charging time of the battery. While cell temperatures around 45°C are still acceptable during charging, one should take care not to select a too high cell temperature, since repeated charging at elevated cell temperatures may potentially limit the life-cycle of the battery,

Fig. 6 depicts how the battery is charged using temperature-controlled charging according to the second embodiment. More specifically, curve 620 depicts the cell temperature of the battery, while curve 610 is the charge current supplied to the battery. As once can see, the charge current is rapidly increased from 0 to about 1,5 A in order to resistively heat up the battery. As before, we assume the battery to have an initial temperature of roughly 0°C. After some time, which from the diagram occurs after 1,2 hours of charging, the battery temperature has reached the predefined optimum range of 28°C-30°C. The charging current is then regulated in order to keep the battery temperature in this interval until the target battery cell voltage (represented by curve 620) has been reached, which is about 4,2 V. At that moment, the charge current is gradually being decreased to 0, since the battery is considered fully charged.

## Claims

1. Method for charging a battery comprising the steps:
- introducing (200) a charging current into the battery;
- monitoring (210) a cell temperature of the battery;
- detecting (220) that the cell temperature has reached a given temperature range; **characterized by**
- successively reducing (230) the charging current until the cell temperature reaches a predefined lower limit of the given temperature range and;
- holding (250) the charging current constant at the level at which the predefined lower cell temperature level has been reached, until a battery cell voltage has reached a target cell voltage (260).

2. Method according to claim 1, wherein the given temperature range is a temperature range in which the battery life span is maximum.

3. Method according to claim 1, wherein, when successively reducing the charging current until the cell temperature reaches a predefined lower limit of the given temperature range, the charging current is reduced stepwise.

4. Method according to one of the claims 1-3, wherein the predefined level is the lower limit of the given temperature range in which the battery life span is maximum.

5. Method according to one of the claims 1-4, wherein the battery is a lithium-based battery.

6. Charging device (100) for a battery (BATT), comprising:
- a control unit (CTRLU) adapted to send a charging current into the battery (BATT);
- a sensing unit (SENS) adapted to monitor the temperature and cell voltage of the battery (BATT);
- a processing unit (CPU) adapted to make the charging device perform the method according to any of claims 1-5.

## Patentansprüche

1. Verfahren zum Laden einer Batterie, das die folgenden Schritte umfasst:
- Einleiten (200) eines Ladestroms in die Batterie;
- Überwachen (210) einer Zellentemperatur der Batterie;
- Detektieren (220), dass die Zellentemperatur einen vorgegebenen Temperaturbereich erreicht hat;
**gekennzeichnet durch**
- sukzessives Reduzieren (230) des Ladestroms, bis die Zellentemperatur eine vordefinierte Untergrenze des vorgegebenen Temperaturbereichs erreicht hat, und;
- Konstanthalten (250) des Ladestroms auf dem Niveau, bei welchem das vordefinierte untere Zellentemperaturniveau erreicht wurde, bis eine Batteriezellenspannung eine Ziel-Zellenspannung erreicht hat (260).

2. Verfahren nach Anspruch 1, wobei der vorgegebene Temperaturbereich ein Temperaturbereich ist, in welchem die Batterielebensdauer maximal ist.

3. Verfahren nach Anspruch 1, wobei, beim sukzessiven Reduzieren des Ladestroms, bis die Zellentemperatur eine vordefinierte Untergrenze des vorgegebenen Temperaturbereichs erreicht hat, der Ladestrom schrittweise reduziert wird.

4. Verfahren nach einem der Ansprüche 1-3, wobei das vordefinierte Niveau die Untergrenze des vorgegebenen Temperaturbereichs ist, in welchem die Batterielebensdauer maximal ist.

5. Verfahren nach einem der Ansprüche 1-4, wobei die Batterie eine auf Lithium basierende Batterie ist.

6. Ladegerät (100) für eine Batterie (BATT), umfassend:
- eine Steuereinheit (CTRLU), die ausgelegt ist zum Senden eines Ladestroms in die Batterie (BATT);
- eine Erfassungseinheit (SENS), die ausgelegt ist zum Überwachen der Temperatur und der Zellenspannung der Batterie (BATT);
- eine Verarbeitungseinheit (CPU), die dazu ausgelegt ist, das Ladegerät zu veranlassen, das Verfahren nach einem der Ansprüche 1-5 durchzuführen.

## Revendications

1. Procédé de charge d'une batterie comprenant les étapes suivantes :
- introduire (200) un courant de charge dans la batterie ;
- surveiller (210) une température de cellule de la batterie ;
- détecter (220) que la température de cellule a atteint une plage de températures donnée ;
**caractérisé par** les étapes suivantes :
- réduire successivement (230) le courant de charge jusqu'à ce que la température de cellule atteigne une limite inférieure prédéfinie de la plage de températures donnée, et ;
- maintenir (250) constant le courant de charge au niveau auquel le niveau de température de cellule inférieur prédéfini a été atteint, jusqu'à ce qu'une tension de cellule de batterie ait atteint une tension de cellule cible (260).

2. Procédé selon la revendication 1, dans lequel la plage de températures donnée est une plage de températures dans laquelle la durée de vie de la batterie est maximale.

3. Procédé selon la revendication 1, dans lequel, lors d'une réduction successive du courant de charge jusqu'à ce que la température de cellule atteigne une limite inférieure prédéfinie de la plage de températures donnée, le courant de charge est réduit pas à pas.

4. Procédé selon l'une des revendications 1 à 3, dans lequel le niveau prédéfini est la limite inférieure de la plage de températures donnée dans laquelle la durée de vie de la batterie est maximale.

5. Procédé selon l'une des revendications 1 à 4, dans lequel la batterie est une batterie à base de lithium.

6. Dispositif de charge (100) pour une batterie (BATT), comprenant :
- une unité de commande (CTRLU) adaptée pour envoyer un courant de charge dans la batterie (BATT) ;
- une unité de détection (SENS) adaptée pour surveiller la température et la tension de cellule de la batterie (BATT) ;
- une unité de traitement (CPU) adaptée pour que le dispositif de charge exécute le procédé selon l'une quelconque des revendications 1 à 5.
